# EUROPÄISCHE PATENTANMELDUNG

(11) **EP 4 697 110 A1**
(43) Veröffentlichungstag der Anmeldung: **18.02.2026**
(21) Anmeldenummer: 24194114.5
(22) Anmeldetag: 12.08.2024
(51) Int. Cl.: G05B 19/409, G05B 19/418, E04H 5/02, E04H 7/00

(54) **STEUERSTAND FÜR EINE GROSSINDUSTRIELLE ANLAGE**

(71) Anmelder: Primetals Technologies Germany GmbH, 91058 Erlangen (DE)
(72) Erfinder: Kerschensteiner, Martin, 92348 Berg (DE); Schistka, Wladimir, 97422 Schweinfurt (DE); Setter, Jens, 91056 Erlangen (DE)
(74) Vertreter: Metals@Linz

(57) **Zusammenfassung**

Ein Steuerstand (8) für eine großindustrielle Anlage, insbesondere eine Anlage der Grundstoffindustrie, beispielsweise der Metallindustrie, konkret ein Walzwerk, umfasst eine Mensch-Maschine-Schnittstelle (12) zur Anlage. Die Mensch-Maschine-Schnittstelle (12) weist Ausgabeeinrichtungen (13) zum Ausgeben von Informationen über die Anlage an eine Bedienperson (14) und Eingabeeinrichtungen (15) zum Entgegennehmen von Steueranweisungen für die Anlage von der Bedienperson (14) und/oder kombinierte Eingabe-/Ausgabeeinrichtungen (16) zum Ausgeben von Informationen über die Anlage an die Bedienperson (14) und zum Entgegennehmen von Steueranweisungen für die Anlage von der Bedienperson (14) auf. Der Steuerstand (8) weist, ohne als solcher Raum eines Gebäudes zu sein, einen eigenen Fußboden (9) und eine eigene Decke (10) auf, die über zwischen dem Fußboden (9) und der Decke (10) verlaufende Seitenelemente (11) des Steuerstands (8) miteinander verbunden sind, so dass der Fußboden (9), die Decke (10) und die Seitenelemente (11) eine in sich stabile Konstruktion bilden und in dieser Form in einer Steuerkabine (3) der großindustriellen Anlage anordenbar ist. Die Mensch-Maschine-Schnittstelle (12) ist innerhalb eines von dem Fußboden (9) und der Decke (10) begrenzten Standvolumens (17) angeordnet.

## Beschreibung

### Gebiet der Technik

Die vorliegende Erfindung geht aus von einem Steuerstand für eine großindustrielle Anlage, insbesondere eine Anlage der Grundstoffindustrie, beispielsweise der Metallindustrie, konkret ein Walzwerk,
- wobei der Steuerstand eine Mensch-Maschine-Schnittstelle zur Anlage umfasst,
- wobei die Mensch-Maschine-Schnittstelle Ausgabeeinrichtungen zum Ausgeben von Informationen über die Anlage an eine Bedienperson und Eingabeeinrichtungen zum Entgegennehmen von Steueranweisungen für die Anlage von der Bedienperson und/oder kombinierte Eingabe-/Ausgabeeinrichtungen zum Ausgeben von Informationen über die Anlage an die Bedienperson und zum Entgegennehmen von Steueranweisungen für die Anlage von der Bedienperson aufweist.

Die Formulierung "Ausgabeeinrichtungen ... und Eingabeeinrichtungen ... und/oder kombinierte Eingabe-/Ausgabeeinrichtungen ..." ist so gemeint, dass
- entweder nur die Ausgabeeinrichtungen und die Eingabeeinrichtungen
- oder nur die kombinierten Eingabe-/Ausgabeeinrichtungen
- oder sowohl die Ausgabeeinrichtungen als auch die Eingabeeinrichtungen als auch die kombinierten Eingabe-/Ausgabeeinrichtungen
vorhanden sind.

Die Ausgabeeinrichtungen können beispielsweise Monitore und andere Anzeigeeinrichtungen sein. Die Informationen über die Anlage können insbesondere deren Zustände sein. Die Eingabeeinrichtungen können beispielsweise Bedientasten und andere Bedienelemente umfassen. Kombinierte Eingabe-/Ausgabeeinrichtungen kombinieren die Eigenschaften von Ausgabeeinrichtungen und Eingabeeinrichtungen miteinander. Es kann sich beispielsweise um Touchscreens handeln.

### Stand der Technik

Steuerstände für großindustrielle Anlagen sind allgemein bekannt. Rein beispielhaft kann auf den Prospekt "BEDIENUNG und VISUALISIERUNG, Elektrik und Automation" der SMS group GmbH verwiesen werden.

### Zusammenfassung der Erfindung

Ein Steuerstand für eine großindustrielle Anlage wird üblicherweise dadurch realisiert, dass die einzelnen Elemente der Mensch-Maschine-Schnittstelle des Steuerstandes in einer Steuerkabine angeordnet werden. Eine Steuerkabine ist ein Raum eines Gebäudes. Bisher befindet sich die Steuerkabine in der unmittelbaren Nähe der großindustriellen Anlage. Durch die zunehmende Digitalisierung und Datenübertragung ist aber auch eine Steuerung und Überwachung der Anlage aus der Ferne denkbar. Da die großtechnische Anlage in der Regel einmalig ist, also nicht mehrere identische derartige großtechnische Anlagen existieren, ist auch der Steuerstand entsprechend individuell. Eine Modularität ist nicht gegeben. Planungen zur konkreten Auslegung des jeweiligen Steuerstandes sind daher aufwendig.

Ein weiterer Nachteil besteht darin, dass die Montage und Verschaltung der einzelnen Komponenten des Steuerstandes erst vor Ort erfolgen kann. Oftmals zeigen sich aber erst bei der Montage vor Ort, dass gewisse Sachverhalte nicht realisierbar sind oder nachteilig sind. In einem derartigen Fall müssen - oftmals schnell und unter hohem Zeitdruck - Anpassungen vorgenommen werden. Darunter leidet die Auslegung des Steuerstands in Hinsicht auf Übersichtlichkeit, Bedienbarkeit und andere Sachverhalte.

Die Aufgabe der vorliegenden Erfindung besteht darin, Möglichkeiten zu schaffen, mittels derer die Nachteile des Standes der Technik behoben werden.

Die Aufgabe wird durch einen Steuerstand mit den Merkmalen des Anspruchs 1 gelöst. Vorteilhafte Ausgestaltungen des Steuerstands sind Gegenstand der abhängigen Ansprüche 2 bis 17.

Erfindungsgemäß wird ein Steuerstand der eingangs genannten Art dadurch ausgestaltet,
- dass der Steuerstand, ohne als solcher Raum eines Gebäudes zu sein, einen eigenen Fußboden und eine eigene Decke aufweist, die über zwischen dem Fußboden und der Decke verlaufende Seitenelemente des Steuerstands miteinander verbunden sind, so dass der Fußboden, die Decke und die Seitenelemente eine in sich stabile Konstruktion bilden und in dieser Form in einer Steuerkabine der großindustriellen Anlage anordenbar ist, und
- dass die Mensch-Maschine-Schnittstelle innerhalb eines von dem Fußboden und der Decke begrenzten Standvolumens angeordnet ist.

Die Steuerkabine ist ein eigenständiger Raum eines Gebäudes. Sie weist - als Bestandteile des Gebäudes - einen Fußboden, eine Decke und Seitenwände auf. In mindestens einer der Seitenwände ist eine Tür angeordnet. Oftmals ist die Steuerkabine in der Nähe der großindustriellen Anlage angeordnet. In diesem Fall kann (mindestens) eine Seitenwand großflächig mit Fenstern versehen sein. Die Fenster können vertikal stehen oder (von unten nach oben gesehen) schräg nach außen verlaufen.

Der Fußboden, die Decke und die Seitenelemente des Steuerstands sind von dem Fußboden, der Decke und den Seitenwänden der Steuerkabine verschiedene Elemente. Dadurch, dass der Steuerstand einen eigenen Fußboden und eine eigene Decke aufweist, die über die Seitenelemente miteinander verbunden sind, ist der Steuerstand ein in sich eigenständiger, von der Steuerkabine als solcher verschiedener Bestandteil. Der Steuerstand ist zwar üblicherweise in der Steuerkabine angeordnet. Der Steuerstand könnte aber theoretisch auch außerhalb der Steuerkabine angeordnet sein und wäre auch in diesem Fall in sich stabil, würde also nicht in sich zusammenfallen oder dergleichen. Er kann theoretisch an einem beliebigen Ort aufgebaut werden. Er könnte sogar in einer Halle oder im Freien aufgestellt werden.

Üblicherweise sind die äußeren Elemente des Steuerstands, also der Fußboden, die Decke und die Seitenelemente, als Metallskelett ausgebildet. Weiterhin sind die genannten Grundelemente des Steuerstands in der Regel lösbar miteinander verbunden, beispielsweise miteinander verschraubt. Das verwendete Metall kann beispielsweise Aluminium oder Stahl sein.

In der Regel weist der Steuerstand ein Bedienpult und einen Bedienplatz für die Bedienperson auf. In dem Bedienpult sind die Eingabeeinrichtungen angeordnet. Der Bedienplatz ist vor dem Bedienpult angeordnet, so dass die Bedienperson - beispielsweise auf einem mehr oder minder üblichen Bürodrehstuhl oder dergleichen - vor dem Bedienpult sitzen kann. Vorzugsweise umfassen die Ausgabeeinrichtungen einen hinter dem Bedienpult angeordnete Monitorwand, die ihrerseits eine Anzahl von Monitoren umfasst, über welche Zustände der Anlage angezeigt werden.

Das Bedienpult ist, analog zum Steuerstand als Ganzes, oftmals als Metallskelett ausgebildet, dessen freie Flächen mit Plattenmaterialien beispielsweise aus Metall, einem holzhaltigen Material oder Kunststoff verkleidet sind.

Die Anzeige auf den Monitoren der Monitorwand kann nach Bedarf numerisch, in Bildern, in Diagrammen usw. erfolgen. Im Einzelfall kann ein einziger großer Monitor ausreichen. Im Regelfall sind aber nebeneinander n Spalten mit jeweils m untereinander angeordneten Monitoren vorhanden, wobei sowohl n als auch m größer als 1 sind. Typisch sind Wertepaare (n,m) von (2,2), (3,2) und (3,3).

Die Monitorwand kann, bezogen auf den Steuerstand, im Einzelfall ortsfest sein. Vorzugsweise ist die Monitorwand jedoch, bezogen auf den Steuerstand, beweglich, so dass die Monitorwand zwischen einem Betriebszustand, in dem die Monitorwand sich von dem Bedienplatz des Steuerstands aus gesehen hinter dem Bedienpult befindet, und einem Parkzustand, in dem die Monitorwand sich nicht hinter dem Bedienpult befindet, bewegbar ist.

Die Beweglichkeit der Monitorwand dient insbesondere dazu, im Falle einer Anordnung vor den Fenstern der Steuerkabine bei Bedarf den Blick auf die Anlage freigeben zu können.

Im Betriebszustand sind die Monitore der Monitorwand in aller Regel aktiv, zeigen also Informationen über den Zustand der Anlage an. Im Parkzustand können die Monitore aktiv oder inaktiv sein. Der Begriff "Parkzustand" dient vorliegend also nur der sprachlichen Unterscheidung vom Betriebszustand, umso auf einfache Art und Weise die beiden Orte, an denen die Monitorwand jeweils angeordnet ist, sprachlich voneinander unterscheiden zu können.

Im einfachsten und derzeit bevorzugten Fall wird die Monitorwand nur seitlich verschoben. In diesem Fall kann eine manuelle Bedienung ausreichen, z.B ein Verschieben auf einer Schiene, die im Steuerstand oberhalb der Monitorwand angeordnet ist und an der die Monitorwand aufgehängt ist. Es ist aber auch eine motorische Bewegung möglich. Alternativ zu einem seitlichen Verschieben ist ein Verschwenken der Monitorwand um ihre obere Kante oder ein Verfahren der Monitorwand ähnlich wie bei einem Garagentor möglich. Im letztgenannten Fall wird die obere Kante der Monitorwand im wesentlichen waagrecht in Richtung auf den Bedienplatz zu verfahren. Die untere Kante der Monitorwand wird hiermit korrespondierend nach oben verfahren. Hier wird in der Regel eine motorische Bewegung erfolgen. Bei Verwendung von Federn und/oder Gegengewichten kann aber auch hier eine manuelle Bewegung möglich sein.

Es ist denkbar, dass die Ausgabeeinrichtungen ausschließlich die Monitorwand umfassen. Normalerweise ist dies jedoch nicht der Fall. Beispielsweise können die Ausgabeeinrichtungen zusätzlich mehrere auf dem Bedienpult angeordnete Monitore umfassen.

Beispielsweise können auf dem Bedienpult insgesamt vier Monitore nebeneinander angeordnet sein. In diesem Fall sind die beiden mittleren Monitore oftmals in einer geraden oder fast geraden Linie nebeneinander angeordnet und bilden die beiden äußeren Monitore jeweils einen Winkel mit den beiden mittleren Monitoren, so dass die Monitore um den Bedienplatz herum geschwungen angeordnet sind. Die Winkel können gegebenenfalls durch Schwenken der beiden äußeren Monitore um vertikale Schwenkachsen einstellbar sein.

Es ist möglich, dass die auf dem Bedienpult angeordneten Monitore dort in Vertikalrichtung gesehen ortsfest angeordnet sind. Vorzugsweise sind diese Monitore jedoch einzeln, gruppenweise oder in ihrer Gesamtheit nach unten in das Bedienpult versenkbar. Derzeit ist - bei insgesamt vier Monitoren nebeneinander - bevorzugt, die beiden linken und die beiden rechten Monitore jeweils gemeinsam in das Bedienpult zu versenken. Es ist aber auch möglich, die Monitore einzeln oder in anderer Gruppenbildung in das Bedienpult zu versenken. Beispielsweise können die beiden äußeren Monitore einzeln und die beiden mittleren Monitore als Gruppe in das Bedienpult versenkbar sein. Es sind alternativ ein motorisches Anheben/Versenken oder ein Anheben/Versenken mit Federkraft möglich.

Vorzugsweise umfassen die kombinierten Eingabe-/Ausgabeeinrichtungen auf dem Bedienpult vor den Monitoren des Bedienpults angeordnete Touchscreens. Dadurch sind oftmals sehr intuitive Eingaben möglich. Beispielsweise können drei Touchscreens vorhanden sein, also einer in der Mitte und je einer links und rechts. Es können aber auch vier oder fünf Touchscreens vorhanden sein. Auf dem mittleren Touchscreen (oder einem der mittleren Touchscreens) wird üblicherweise eine symbolische Darstellung der Anlage zur Anzeige gebracht.

Vorzugsweise sind die Touchscreens relativ zu einer waagrechten Ebene schräg angeordnet. Aufgrund der schrägen Anordnung kann die Bedienperson gut auf die Touchscreens blicken. Dennoch sind die auf dem Bedienpult angeordneten Monitore nicht oder zumindest nur unwesentlich verdeckt. Gegebenenfalls kann die Schrägstellung der Touchscreens einstellbar sein. Hierbei kann nach Bedarf die Oberkante des jeweiligen Touchscreens angehoben und abgesenkt werden oder - derzeit bevorzugt - die Unterkante des jeweiligen Touchscreens nach Bedarf angehoben und abgesenkt werden. Soweit erforderlich, kann das Bedienpult zu diesem Zweck eine jeweilige Vertiefung zur Aufnahme der jeweiligen Unterkante aufweisen. Auch eine Kombination von Anheben/Absenken von Oberkante und Unterkante des jeweiligen Touchscreens ist möglich.

Vorzugsweise sind die Eingabeeinrichtungen zum Entgegennehmen der Steueranweisungen für die Anlage zumindest teilweise in einer Bedienkonsole angeordnet, die ihrerseits in dem Bedienpult mittig vor den Touchscreens angeordnet ist. Diese Ausgestaltung hat sich als besonders praktisch erwiesen. Eine Bedienkonsole ist eine eigenständige Baueinheit, in welcher die entsprechenden Eingabeeinrichtungen angeordnet sind.

Die Bedienkonsole kann als Eingabeeinrichtungen diskrete Tasten aufweisen. Beispielsweise kann die Bedienkonsole, wenn die Anlage eine Walzstraße mit mehreren Walzgerüsten ist, pro Walzgerüst der Anlage je eine Gruppe von Tasten aufweisen. Die Tasten sind in diesem Fall derart angeordnet, dass die Gruppen von Tasten von links nach rechts entsprechend der Abfolge der Walzgerüste nebeneinander angeordnet sind. Pro Walzgerüst sind die Tasten vorzugsweise jeweils gleichartig angeordnet. Die Bedienkonsole kann aber auch als Touchscreen oder als Touchpad ausgebildet sein. Vorzugsweise ist die Bedienkonsole als Einheit austauschbar, sei es durch eine gleichartige Bedienkonsole, sei es durch eine andersartige Bedienkonsole.

Zusätzlich ist möglich, dass vom Bedienplatz aus gesehen am linken Rand und/oder am rechten Rand der Bedienkonsole oder links und/oder rechts neben der Bedienkonsole oder links und/oder rechts neben den Touchscreens ein Joystick angeordnet ist. Dadurch sind auf einfache und oftmals sehr intuitive Art und Weise weitere Eingaben möglich.

Im Falle von drei nebeneinander angeordneten Touchscreens ist der rechte Joystick vorzugsweise vor dem rechten Touchscreen angeordnet, der linke Joystick vorzugsweise vor dem linken Touchscreen.

Dem jeweiligen Joystick kann dynamisch eine Funktion zugeordnet werden. Die Auswahl kann beispielsweise durch Anwählen eines Feldes auf dem Touchscreen vor dem entsprechenden Joystick oder durch Anwählen eines Feldes auf dem mittleren Touchscreen erfolgen. Beispielsweise kann die Bedienperson auf dem mittleren Touchscreen die Darstellung eines Aggregats der Anlage (beispielsweise eines Walzgerüsts) auswählen, wodurch die Funktionalität für den entsprechenden Joystick festgelegt wird. Auch ist es möglich, dass ein völlig anderes Bedienelement vorhanden ist, mittels dessen eine Auswahl eines Elements erfolgen kann, das über einen der auf dem Bedienpult angeordneten Monitore - bei insgesamt vier nebeneinander angeordneten Monitoren insbesondere einen der beiden mittleren Monitore, beispielsweise dem rechten der beiden mittleren Monitore - angezeigt wird.

Vorzugsweise ist vom Bedienplatz aus gesehen rechts neben dem rechten Joystick und/oder links neben dem linken Joystick ein weiteres Bedienelement angeordnet. Diese Bedienelemente sind im Regelfall nicht Bestandteil der Bedienkonsole. Mittels derartiger Bedienelemente können beispielsweise Elemente gesteuert werden, die Bestandteil des Steuerstandes sind. Beispielsweise kann damit eine Höhenverstellung des Bedienpults vorgenommen werden oder eine Arbeitsplatzbeleuchtung eingestellt werden und andere mehr.

Derzeit ist bevorzugt, dass an dem Bedienpult unterhalb der Bedienkonsole eine zusätzliche Konsole vorhanden ist, die aus dem Bedienpult auf den Bedienplatz zu ausfahrbar bzw. von dem Bedienplatz weg unter das Bedienpult fahrbar ist. Auf der zusätzlichen Konsole kann beispielsweise eine übliche Computertastatur angeordnet sein, über die Eingaben von der Bedienperson vorgenommen werden können. Gegebenenfalls kann auf der zusätzlichen Konsole auch Platz für eine Computermaus sein. Somit kann auf einfache Art und Weise beispielsweise eine übliche PC-Funktionalität realisiert werden. Das zugehörige Ausgabemedium kann beispielsweise (mindestens) einer der auf dem Bedienpult angeordneten Monitore sein.

Vorzugsweise ist vom Bedienplatz aus gesehen rechts neben der zusätzlichen Konsole eine ausfahrbare bzw. einfahrbare kleine Konsole angeordnet. Die kleine Konsole kann beispielsweise von ihrer Größe her für eine Computermaus oder dergleichen ausgelegt sein, sofern nicht bereits die zusätzliche Konsole hierfür dient. Entsprechend ist die kleine Konsole dimensioniert. Beispielsweise kann sie eine Breite von ca. 20 cm bis ca. 30 cm und eine Tiefe in der gleichen Größenordnung aufweisen. Die kleine Konsole kann gegenüber der zusätzlichen Konsole abgesenkt sein, so dass die Computermaus unabhängig davon bedient werden kann, ob die weitere Konsole eingefahren oder ausgefahren ist.

Weiterhin ist es möglich, dass vom Bedienplatz aus gesehen links neben der zusätzlichen Konsole ein Bedienfeld angeordnet ist. Mittels der Elemente des Bedienfeldes können beispielsweise Elemente des Steuerstandes oder, sofern der Steuerstand in einer Steuerkabine angeordnet ist, Elemente der Steuerkabine gesteuert werden, beispielsweise eine in den Steuerstand integrierte Beleuchtung. Das Bedienfeld kann analog zur zusätzlichen Konsole ausfahrbar und einfahrbar sein.

Vorzugsweise weist das Bedienpult an seiner Oberseite zwischen den auf dem Bedienpult angeordneten Monitoren und der Monitorwand eine Klappe auf, die um eine vom Bedienplatz aus gesehen von links nach rechts verlaufende waagrechte Achse nach oben schwenkbar ist. Dadurch ist dann, wenn die Klappe nach oben geschwenkt ist, so dass sie im wesentlichen vertikal orientiert ist, ist ein Bereich des Bedienpults zugänglich, der bei nach unten geschwenkter, im wesentlichen horizontal orientierter Klappe durch die Klappe abgedeckt ist. In diesem Bereich können Einschübe oder andere vorbereitete Aufnahmen für elektrische und elektronische Baugruppen vorhanden sein. Diese Baugruppen können insbesondere mit den Monitoren, den Touchscreens, der Bedienkonsole und dem Bedienfeld usw. auf der einen Seite und der Anlage und gesteuerten Elementen des Steuerstands und eventuell auch der Steuerkabine auf der anderen Seite zusammenwirken, also als Schnittstelle zwischen dem übrigen Steuerstand und der Anlage dienen.

Etwaige Lüftungsschlitze oder Lüftungsbohrungen zum Abführen von Wärme aus dem mit der Klappe abdeckbaren Bereich befinden sich vorzugsweise nicht auf der Oberseite des Bedienpults und auch nicht auf der Klappe, sondern im oberen Bereich der Seiten des Bedienpults. Diese Anordnung der Lüftungsöffnungen dient dem Schutz der Baugruppen, falls auf dem Bedienpult versehentlich eine Flüssigkeit verschüttet wird, beispielsweise eine Flasche oder eine Tasse umfällt.

Vorzugsweise weist der Steuerstand Leuchtelemente auf, die von einer Steuereinrichtung des Steuerstands dynamisch angesteuert werden.

Es ist möglich, dass die Ansteuerung der Leuchtelemente im Normalbetrieb der Anlage beispielsweise (lediglich) dem Zweck dient, die Bedienperson zu "unterhalten", damit diese beispielsweise während einer Nachtschicht nicht einschläft. Die Ansteuerung kann aber auch dynamisch in Abhängigkeit von dem Anlagenzustand erfolgen, um die Bedienperson beispielsweise darauf hinzuweisen, dass bezüglich der Anlage und/des Steuerstands gewisse Aktionen erforderlich sind oder sogar Fehlerfälle eingetreten sind, die ein sofortiges Reagieren oder Eingreifen der Bedienperson erfordern. Auch ist es möglich die Ansteuerung in Abhängigkeit davon vorzunehmen, ob der Steuerstand von einer Bedienperson besetzt ist oder nicht. Dadurch kann beispielsweise jemand, der sich außerhalb des Steuerstands im Bereich der Anlage befindet, diesen Zustand erkennen. Dies setzt natürlich voraus, dass die entsprechenden Leuchtelemente von der Anlage aus einsehbar sind bzw. zumindest deren Ansteuerzustand von der Anlage aus bzw. allgemein von außen erkennbar ist.

Die Ansteuerung in Abhängigkeit davon, ob der Steuerstand von einer Bedienperson besetzt ist oder nicht, setzt eine entsprechende Erfassung voraus. Eine derartige Erfassung ist - auch in automatisierter Weise - ohne weiteres möglich. Sie kann beispielsweise durch einen Bewegungsmelder im Steuerstand oder durch einen Kraftsensor in einem Stuhl, auf dem die Bedienperson üblicherweise sitzt, erfolgen. Auch andere Arten der Erkennung sind möglich, beispielsweise über eine sogenannte Totmanntaste oder eine ähnliche Totmannschaltung. Die Erkennung der Anwesenheit kann mit einer Zeitschranke gekoppelt sein, so dass die Bedienperson sich kurzzeitig entfernen kann, ohne dass sofort eine Meldung "Steuerstand nicht besetzt" erfolgt. Die Zeitschranke kann nach Bedarf bestimmt sein und im Bereich von einigen Sekunden bis (maximal) wenigen Minuten liegen.

Weitere, nicht dynamisch angesteuerte Leuchtelemente können beispielsweise der Beleuchtung des Bedienplatzes oder der Bedienkonsole dienen. Diese Leuchtelemente sind in der Regel in der Decke des Steuerstandes angeordnet.

Vorzugsweise ist die Mensch-Maschine-Schnittstelle in einem Kernbereich des Standvolumens angeordnet. Zur Erhöhung des Komforts für die Bedienperson ist es möglich, dass der Steuerstand ein Küchenelement aufweist, das innerhalb des Standvolumens neben dem Kernbereich (und damit insbesondere außerhalb des Kernbereichs) angeordnet ist.

Das Küchenelement muss, um ein Küchenelement zu sein, (zumindest) eine Spüle einschließlich ihrer Zapfstelle für Wasser und ihrem Abfluss umfassen. In aller Regel umfasst das Küchenelement weiterhin ein Kochfeld (vorzugsweise mit mindestens zwei Kochstellen) und einen Kühlschrank sowie eine Arbeitsfläche. In vielen Fällen ist auch ein Küchenschrank vorhanden. Weitere mögliche Elemente des Küchenelements sind ein Kühlschrank, eine Mikrowelle und eventuell ein kleiner Backofen.

Vorzugsweise sind in der Decke des Steuerstands Lautsprecher und/oder Akustikelemente und/oder Beleuchtungselemente und/oder optische Elemente für Lichteffekte angeordnet. Dadurch sind entsprechende Ausgaben möglich, sei es an die Bedienperson im Steuerstand, sei es nach außen.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:
- FIG 1: eine Anlage der Grundstoffindustrie von oben,
- FIG 2: die Anlage von FIG 1 aus einer Richtung II in FIG 1,
- FIG 3: einen Steuerstand von der Seite,
- FIG 4: den Steuerstand von FIG 3 aus einer Richtung IV in FIG 3,
- FIG 5: eine perspektivische Darstellung von Elementen des Steuerstands der FIG 3 und 4,
- FIG 6: eine Draufsicht von oben auf wesentliche Teile eines Steuerstands,
- FIG 7: eine Modifikation von FIG 6,
- FIG 8: eine Draufsicht auf ein Bedienpult,
- FIG 9: eine Seitenansicht eines Bedienpults und
- FIG 10: ein Blockschaltbild.

### Beschreibung der Ausführungsformen

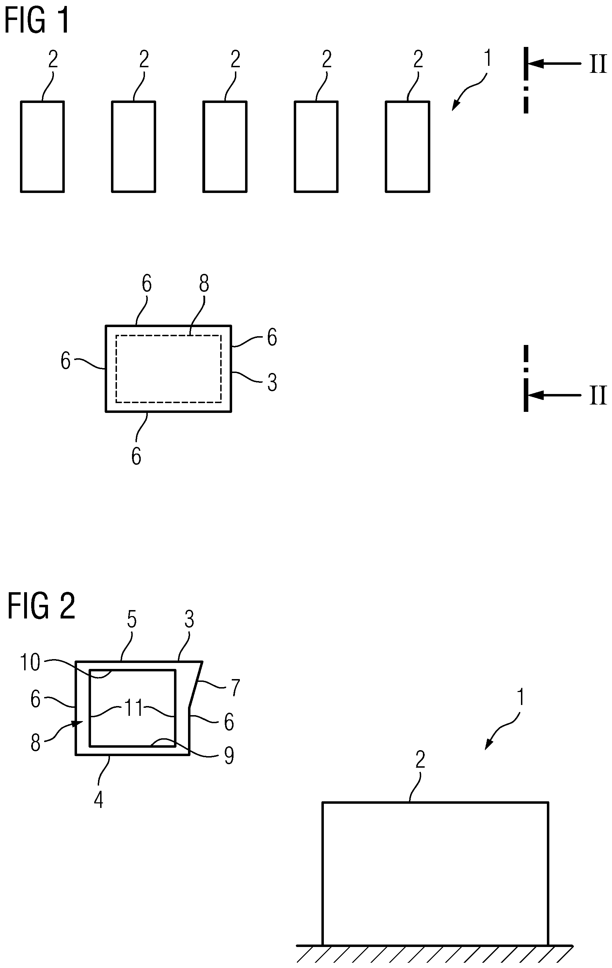

Gemäß den FIG 1 und 2 weist eine großindustrielle Anlage einen Anlagenbereich 1 auf, in dem sich verschiedene Aggregate 2 der Anlage befinden. Die Anlage ist vorliegend ein Walzwerk und damit eine Anlage der Metallindustrie. Im Falle eines Walzwerks sind die Aggregate 2 Walzgerüste und deren ergänzende Komponenten. Die Walzgerüste sind in den FIG 1 und 2 nur völlig schematisch dargestellt. Ein Walzgut, das in den Walzgerüsten gewalzt wird, ist nicht dargestellt. Prinzipiell muss die Anlage aber nicht als Walzwerk ausgebildet sein. Sie kann auch als andersartige Anlage der Metallindustrie ausgebildet sein. Sie kann sogar als Anlage der Grundstoffindustrie ausgebildet sein, die keine Anlage der Metallindustrie ist.

Die Anlage kann beispielsweise von einer Steuerkabine 3 aus gesteuert werden. Die Steuerkabine 3 ist ein Raum eines Gebäudes. Die Steuerkabine 3 weist daher einen Fußboden 4, eine Decke 5 und Seitenwände 6 auf. Ein Teil der Seitenwände 6 kann mit Fenstern 7 versehen sein, um einen Blick auf die Anlage zu ermöglichen. Die Fenster 7 sind entsprechend der Darstellung in FIG 2 oftmals schräg angeordnet. Das Gebäude als solches ist vorliegend nicht relevant und daher nicht dargestellt.

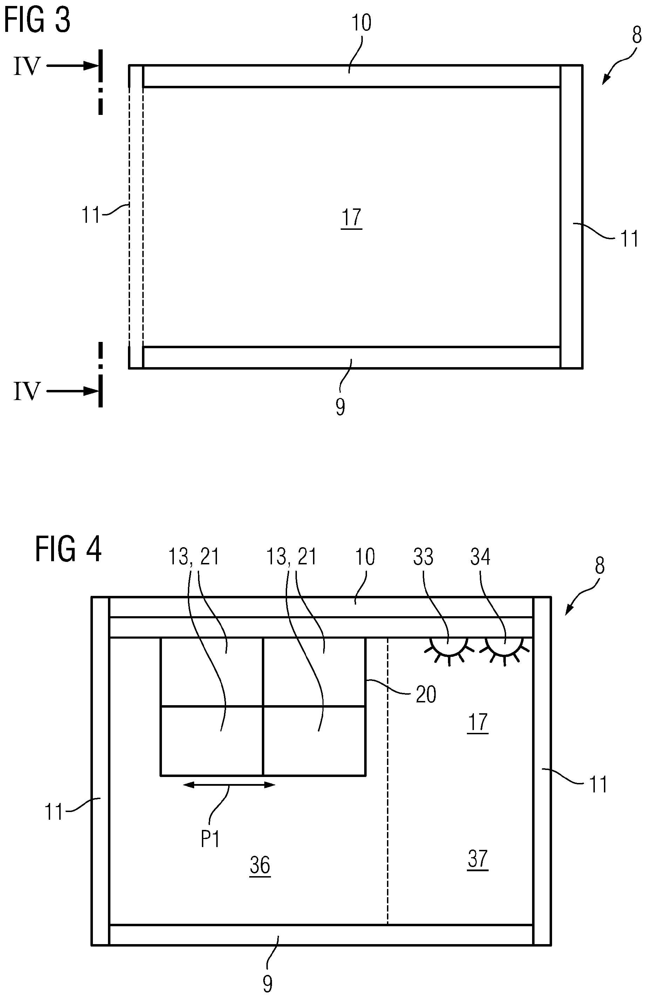

Die vorliegende Erfindung betrifft einen Steuerstand 8 für die großindustrielle Anlage, gemäß Beispiel das Walzwerk. Ein derartiger Steuerstand 8 wird oftmals auch als COC ("central operation cockpit" bezeichnet. Mittels des Steuerstandes 8 soll die großindustrielle Anlage überwacht und gesteuert werden. Der Steuerstand 8 kann entsprechend der Darstellung in den FIG 1 und 2 insbesondere in der Steuerkabine 3 angeordnet sein. Es handelt sich bei dem Steuerstand 8 jedoch nicht um einen Raum eines Gebäudes als solchen. Der Steuerstand 8 weist gemäß den FIG 1 bis 4 einen eigenen Fußboden 9 und eine eigene Decke 10 auf, die über Seitenelemente 11 des Steuerstands 8 miteinander verbunden sind. Der Fußboden 9, die Decke 10 und die Seitenelemente 11 sind also von dem Fußboden 4, der Decke 5 und den Seitenwänden 6 der Steuerkabine 3 verschiedene Elemente. Sie bilden eine in sich stabile Konstruktion, die entsprechend der Darstellung in den FIG 1 und 2 in dieser Form in der Steuerkabine 3 anordenbar ist. Gemäß FIG 3 weist der Steuerstand 8 an allen vier Ecken Seitenelemente 11 auf. In manchen Ausgestaltungen kann es jedoch ausreichen, wenn nur zwei Seitenelemente 11 vorhanden sind. Aus diesem Grund sind in FIG 3 zwei der Seitenelemente 11 nur gestrichelt eingezeichnet. In der Ausgestaltung der FIG 3 und 4 sind die Seitenelemente 11 Streben. Alternativ können die Seitenelemente 11 sich aber auch nach Art einer Wand über eine größere Fläche erstrecken.

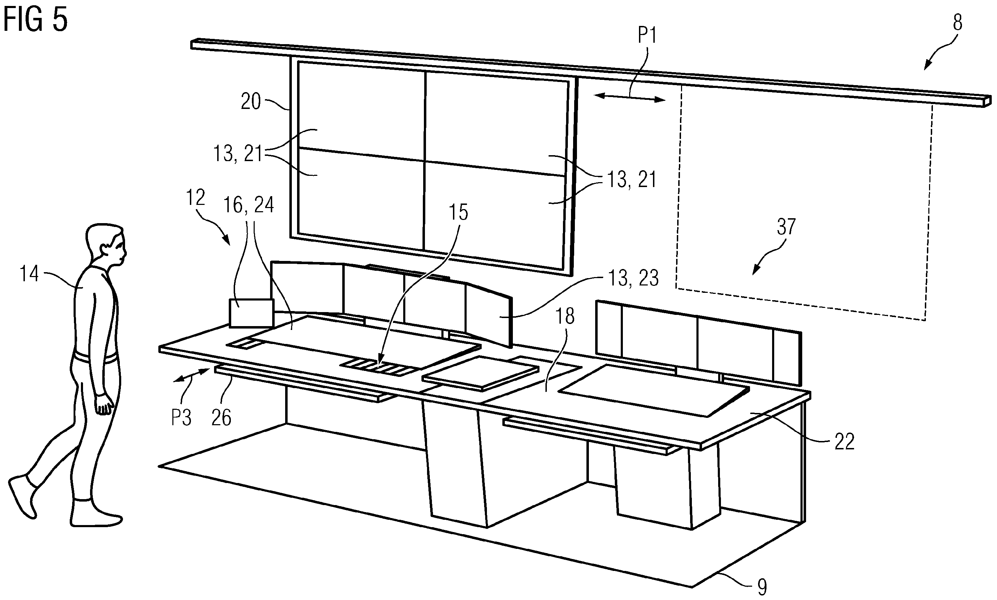

FIG 5 zeigt eine perspektivische Ansicht einer möglichen Ausgestaltung des Steuerstands 8. In FIG 5 ist der Fußboden 9 nur verkürzt dargestellt. In der Realität erstreckt er sich weiter nach links, rechts und auch nach vorne. Die Decke 10 und die Seitenelemente 11 sind in FIG 5 gar nicht dargestellt. Sie sind aber vorhanden. Gemäß FIG 5 umfasst der Steuerstand 8 eine Mensch-Maschine-Schnittstelle 12 zur Anlage, nachfolgend kurz als HMI 12 bezeichnet. Die Abkürzung HMI steht, wie Fachleuten allgemein bekannt ist, für human-machine-interface.

Das HMI 12 weist Ausgabeeinrichtungen 13 auf. Von den Ausgabeeinrichtungen 13 sind in FIG 5 nur einige ihrem Bezugszeichen versehen. Die Ausgabeeinrichtungen 13 dienen dem Ausgeben von Informationen über die Anlage an eine Bedienperson 14. Weiterhin weist das HMI 12 Eingabeeinrichtungen 15 auf. Die Eingabeeinrichtungen 15 dienen dem Entgegennehmen von Steueranweisungen für die Anlage von der Bedienperson 14. Weiterhin weist das HMI 12 auch kombinierte Eingabe-/Ausgabeeinrichtungen 16 auf. Auch von den kombinierten Eingabe-/Ausgabeeinrichtungen 16 sind in FIG 5 nur einige ihrem Bezugszeichen versehen. Die kombinierten Eingabe-/Ausgabeeinrichtungen 16 erfüllen beide Funktionen, also sowohl das Ausgeben von Informationen über die Anlage an die Bedienperson 14 als auch das Entgegennehmen von Steueranweisungen für die Anlage von der Bedienperson 14.

Der Fußboden 9 und die Decke 10 begrenzen - siehe die FIG 3 und 4 - ein Volumen 17, nachfolgend als Standvolumen bezeichnet. Das HMI 12 ist innerhalb des Standvolumens 17 angeordnet.

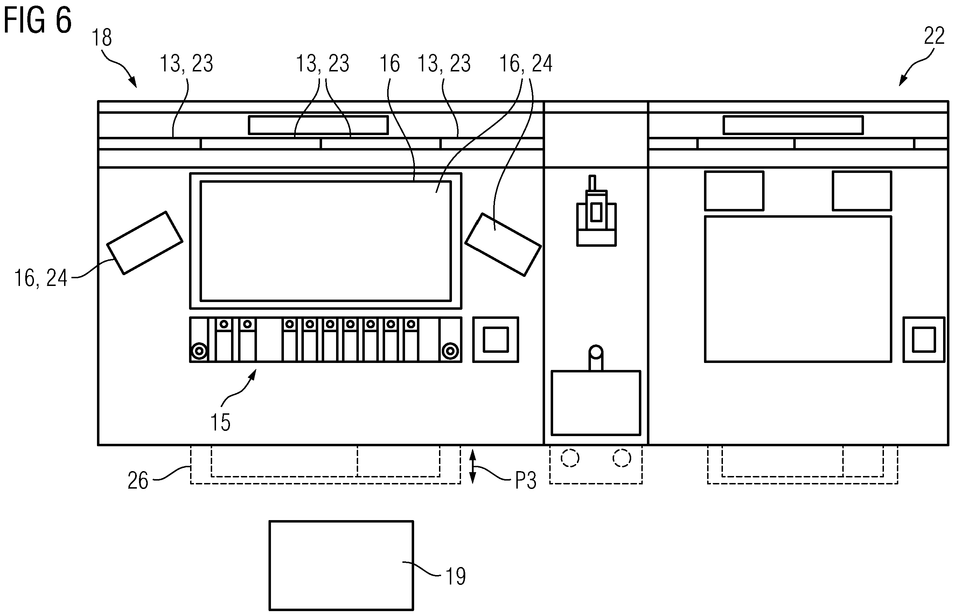

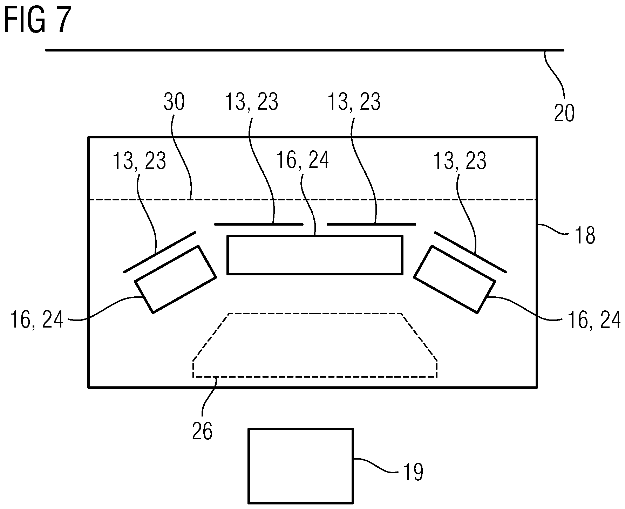

In der Regel weist der Steuerstand 8 entsprechend der Darstellung in FIG 5 ein Bedienpult 18 auf. Das Bedienpult 18 kann, so wie dies für Büroschreibtische bekannt ist, mechanisch oder elektrisch höhenverstellbar sein. Mögliche Ausgestaltungen des Bedienpults 18 sind in den FIG 6 und 7 dargestellt. In dem Bedienpult 18 sind die Eingabeeinrichtungen 15 angeordnet. Der Steuerstand 8 weist weiterhin einen Bedienplatz 19 für die Bedienperson 14 auf. Der Bedienplatz 19 ist vor dem Bedienpult 18 angeordnet.

Die Ausgabeeinrichtungen 13 umfassen oftmals eine Monitorwand 20. Die Monitorwand 20 ist hinter dem Bedienpult 18 angeordnet. Die Monitorwand 20 umfasst ihrerseits eine Anzahl von Monitoren 21, über welche Zustände der Anlage angezeigt werden. Die Darstellung in den FIG 4 und 5, bei welcher die Monitorwand 20 2 x 2 = 4 Monitore 21 aufweist, ist rein beispielhaft. Die Unterkante der Monitorwand 20 befindet sich vorzugsweise auf einer Höhe, auf welcher alle Monitore 21 der Monitorwand 20 vom Bedienplatz 19 aus in vollem Umfang einsehbar sind, also insbesondere nicht von anderen Elementen verdeckt sind.

Vorzugsweise ist die Monitorwand 20, bezogen auf den Steuerstand 8, beweglich. Beispielsweise kann entsprechend der Darstellung in den FIG 4 und 5 eine Tragschiene vorhanden sein, entlang der die Monitorwand 20 verschoben werden kann. Die Beweglichkeit ist in den FIG 4 und 5 durch einen Doppelpfeil P1 angedeutet.

Die FIG 5 und 7 zeigen die Monitorwand 20, während sie sich von dem Bedienplatz 19 aus gesehen hinter dem Bedienpult 18 befindet. Dieser Zustand wird als Betriebszustand bezeichnet. Im Betriebszustand sind die Monitore 21 in aller Regel aktiv. Gestrichelt ist in FIG 5 gezeigt, an welchen Ort die Monitorwand 20 bewegt werden kann. Im diesen Zustand befindet sich die Monitorwand 20 nicht (ergänze: direkt) hinter dem Bedienpult 18, sondern seitlich hinter dem Bedienpult 18. Dieser Zustand wird nachstehend als Parkzustand bezeichnet. Im Parkzustand können die Monitore 21 alternativ aktiv oder nicht aktiv sein. Wenn entsprechend der Darstellung in den FIG 5 und 6 neben dem Bedienpult 18 ein zusätzliches Bedienpult 22 angeordnet ist und die Monitorwand 20 sich im Parkzustand hinter dem zusätzlichen Bedienpult 22 befindet, so sind die Monitore in der Regel auch im Parkzustand aktiv. Das zusätzliche Bedienpult 22 kann im Einzelfall die gleiche Funktionalität wie das Bedienpult 18 aufweisen. Oftmals weist es jedoch nur eine reduzierte Funktionalität auf, beispielsweise für einen Notbetrieb oder für Teilaufgaben, um die Bedienperson 14, welche das Bedienpult 18 bedient, zu entlasten.

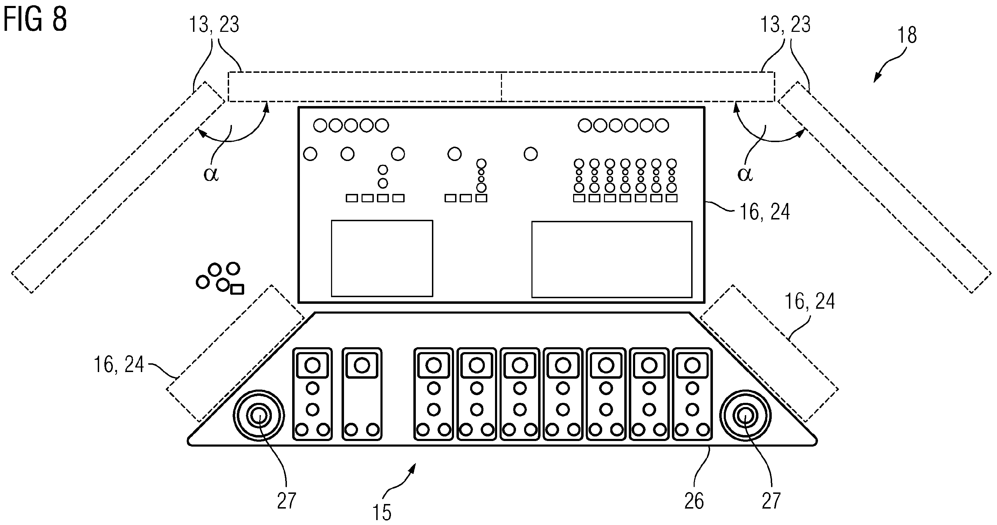

Die Ausgabeeinrichtungen 13 können entsprechend der Darstellung in FIG 5 weiterhin auch mehrere Monitore 23 umfassen, die auf dem Bedienpult 18 angeordnet sind. Gemäß den FIG 5 bis 7 - siehe ergänzend FIG 8 - sind insgesamt vier derartige Monitore 23 vorhanden. Die Anzahl an Monitoren 23 kann aber auch größer oder kleiner sein.

Es ist möglich, dass die Monitore 23 entsprechend der Darstellung in FIG 6 in einer Reihe angeordnet sind. Alternativ können die Monitore 23 entsprechend der Darstellung in den FIG 5, 7 und 8 unter einem Winkel α relativ zueinander angeordnet sein. Der Winkel α kann gegebenenfalls in Stufen oder stufenlos einstellbar sein. Der Winkel α liegt üblicherweise mindestens bei 120° und maximal bei 180°. Die Bildung des Winkels α gilt insbesondere für die beiden äußeren Monitore 23 relativ zu den beiden mittleren Monitoren 23.

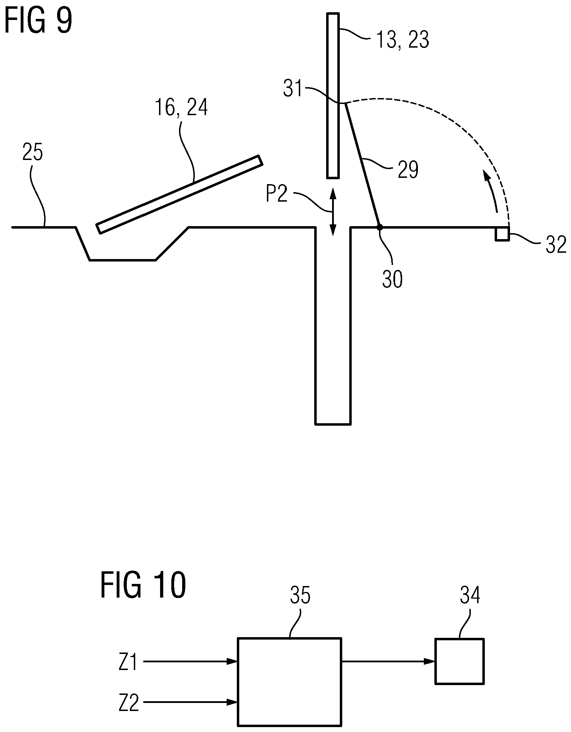

Es ist möglich, dass die Monitore 23 stets auf dem Bedienpult 18 angeordnet sind. Alternativ ist es entsprechend der Darstellung in FIG 9 möglich, die Monitore 23 in das Bedienpult 18 hinein zu versenken. Die Versenkbarkeit ist in FIG 9 durch einen Doppelpfeil P2 angedeutet. Es ist möglich, dass die Monitore 23 einzeln, gruppenweise oder in ihrer Gesamtheit versenkbar sind. Es ist auch möglich, dass die Monitore 23, wenn sie versenkt werden sollen, entsprechend der Darstellung in FIG 6 in einer Reihe (Winkel α = 180°) angeordnet sein müssen.

Die kombinierten Eingabe-/Ausgabeeinrichtungen 16 umfassen vorzugsweise Touchscreens 24, die auf dem Bedienpult 18 vor den Monitoren 23 angeordnet sind. Die Touchscreens 24 sind entsprechend der Darstellung in den FIG 5 und 9 vorzugsweise relativ zu einer waagerechten Ebene (angedeutet durch die Oberseite 25 des Bedienpults 18) schräg angeordnet. Vorzugsweise liegt hierbei die Unterkante des jeweiligen Touchscreens 25 entsprechend der Darstellung in FIG 9 unterhalb der Oberseite 25.

Die Eingabeeinrichtungen 15 sind zumindest teilweise in einer Bedienkonsole 26 angeordnet. Die Bedienkonsole 26 ist ihrerseits in dem Bedienpult 18 mittig vor den Touchscreens 24 angeordnet. Weiterhin ist vorliegend vom Bedienplatz 19 aus gesehen am linken Rand und am rechten Rand der Bedienkonsole 26 je ein Joystick 27 angeordnet. Es ist alternativ auch möglich, dass nur am linken oder nur am rechten Rand der Bedienkonsole 26 ein Joystick 27 angeordnet ist. Der Joystick 27 oder die Joysticks 27 können insbesondere Eingabeeinrichtungen 15 sein.

Alternativ zu einer Anordnung am jeweiligen Rand der Bedienkonsole 26 könnten die Joysticks 27 auch links und/oder rechts neben der Bedienkonsole 26 oder links und/oder rechts neben den Touchscreens 24 angeordnet sein. Gegebenenfalls kann weiterhin vom Bedienplatz 19 aus gesehen rechts neben dem rechten Joystick 27 und/oder links neben dem linken Joystick 27 ein weiteres Bedienelement angeordnet sein. Die weiteren Bedienelemente sind in den FIG nicht dargestellt.

Gemäß den FIG 5 und 6 kann weiterhin an dem Bedienpult 18 unterhalb der Bedienkonsole 26 eine zusätzliche Konsole 28 vorhanden. Die zusätzliche Konsole 28 ist, sofern sie vorhanden ist, aus dem Bedienpult 18 auf den Bedienplatz 19 zu ausfahrbar bzw. von dem Bedienplatz 19 weg unter das Bedienpult 18 fahrbar. Die Verfahrbarkeit ist in den FIG 5 und 6 durch einen Doppelpfeil P3 angedeutet.

Vom Bedienplatz 19 aus gesehen kann weiterhin rechts neben der zusätzlichen Konsole 28 eine ausfahrbare bzw. einfahrbare kleine Konsole angeordnet sein. Diese Konsole ist in den FIG nicht dargestellt. Entsprechend der Darstellung in FIG 7 kann weiterhin vom Bedienplatz 19 aus gesehen links neben der zusätzlichen Konsole 28 ein Bedienfeld angeordnet sein.

Gemäß FIG 9 kann das Bedienpult 18 an seiner Oberseite 25 eine Klappe 29 aufweisen. Die Klappe 29 ist, sofern sie vorhanden ist, zwischen den Monitoren 23 und der Monitorwand 20 angeordnet. Die Klappe 29 ist um eine Achse 30 schwenkbar. Die Achse 30 ist waagrecht orientiert und verläuft vom Bedienplatz 19 aus gesehen von links nach rechts. Üblicherweise ist die von der Achse 30 entfernte Kante 31 der Klappe 29 entsprechend der Darstellung in FIG 9 in der Nähe der Rückseite der Monitore 23 angeordnet, wenn die Klappe 29 nach oben geschwenkt ist. Wenn die Klappe 29 nach unten geschwenkt ist, liegt sie im wesentlichen horizontal auf einem Anschlag 32 auf. In diesem Zustand ist die Kante 31 von der Rückseite der Monitore 23 beabstandet.

In vielen Fällen wird der Steuerstand 8 entsprechend der Darstellung in den FIG 3 und 4 Leuchtelemente 33, 34 aufweisen. Die Leuchtelemente 33 dienen üblicherweise lediglich der in "normalen" Ausleuchtung des Standvolumens 17. Die Leuchtelemente 33 können von der Bedienperson 14 eigenständig eingeschaltet und ausgeschaltet werden. Die Leuchtelemente 34 werden hingegen gemäß FIG 10 von einer Steuereinrichtung 35 des Steuerstands 8 dynamisch angesteuert. Beispielsweise kann die Ansteuerung in Abhängigkeit von einem Zustand Z1 der gesteuerten Anlage abhängen, um die Bedienperson 14 rechtzeitig auf kritische Sachverhalte aufmerksam zu machen. Alternativ oder zusätzlich kann die Ansteuerung in Abhängigkeit von einem Zustand Z2 des Steuerstands 8 selbst erfolgen, insbesondere in Abhängigkeit davon, ob der Bedienplatz 19 von der Bedienperson 14 besetzt ist oder nicht. Beispielsweise kann durch entsprechende Ansteuerung der Leuchtelemente 34 deren Leuchtfarbe geändert werden (beispielsweise ein Wechsel von grün auf rot, gegebenenfalls über den Zwischenzustand gelb). Alternativ oder zusätzlich kann eine zeitlich variierende Ansteuerung erfolgen (beispielsweise in Abhängigkeit vom Zustand Z1 und/oder vom Zustand Z2 ein Dauerleuchten, ein langsames Blinken oder ein schnelles Blinken).

Das HMI 12 ist gemäß den FIG 4, 5 und 7 in einem Kernbereich 36 des Standvolumens 17 angeordnet. Zusätzlich kann das Standvolumen 17 einen Ergänzungsbereich 37 (FIG 4, FIG 5) und/oder einen Küchenbereich (nicht dargestellt) umfassen. Der Ergänzungsbereich 37 und/oder der Küchenbereich sind neben dem Kernbereich 36 angeordnet. Im Ergänzungsbereich 37 ist, sofern er vorhanden ist, das ergänzende Bedienpult 22 angeordnet. Im Küchenbereich ist, sofern er vorhanden ist, ein Küchenelement angeordnet.

Weiterhin können in der Decke 10 des Steuerstands 8 Lautsprecher und/oder andere Akustikelemente angeordnet sein.

Die vorliegende Erfindung weist viele Vorteile auf. Der Steuerstand 8 ist modular aufgebaut und kann daher auf einfache Weise gewartet, repariert und auch an geänderte Bedürfnisse angepasst werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Anlagenbereich
- 2: Aggregate
- 3: Steuerkabine
- 4,9: Fußböden
- 5, 10: Decken
- 6: Seitenwände
- 7: Fenster
- 8: Steuerstand
- 11: Seitenelemente
- 12: Mensch-Maschine-Schnittstelle
- 13: Ausgabeeinrichtungen
- 14: Bedienperson
- 15: Eingabeeinrichtungen
- 16: kombinierte Eingabe-/Ausgabeeinrichtungen
- 17: Standvolumen
- 18, 22: Bedienpulte
- 19: Bedienplatz
- 20: Monitorwand
- 21, 23: Monitore
- 24: Touchscreens
- 25: Oberseite
- 26: Bedienkonsole
- 27: Joystick
- 28: zusätzliche Konsole
- 29: Klappe
- 30: Achse
- 31: Kante
- 32: Anschlag
- 33, 34: Leuchtelemente
- 35: Steuereinrichtung
- 36: Kernbereich
- 37: Ergänzungsbereich

- P1 bis P3: Doppelpfeile
- Z1, Z2: Zustände

- α: Winkel

## Patentansprüche

1. Steuerstand für eine großindustrielle Anlage, insbesondere eine Anlage der Grundstoffindustrie, beispielsweise der Metallindustrie, konkret ein Walzwerk,
- wobei der Steuerstand eine Mensch-Maschine-Schnittstelle (12) zur Anlage umfasst,
- wobei die Mensch-Maschine-Schnittstelle (12) Ausgabeeinrichtungen (13) zum Ausgeben von Informationen über die Anlage an eine Bedienperson (14) und Eingabeeinrichtungen (15) zum Entgegennehmen von Steueranweisungen für die Anlage von der Bedienperson (14) und/oder kombinierte Eingabe-/Ausgabeeinrichtungen (16) zum Ausgeben von Informationen über die Anlage an die Bedienperson (14) und zum Entgegennehmen von Steueranweisungen für die Anlage von der Bedienperson (14) aufweist,
**dadurch gekennzeichnet,**
- **dass** der Steuerstand, ohne als solcher Raum eines Gebäudes zu sein, einen eigenen Fußboden (9) und eine eigene Decke (10) aufweist, die über zwischen dem Fußboden (9) und der Decke (10) verlaufende Seitenelemente (11) des Steuerstands miteinander verbunden sind, so dass der Fußboden (9), die Decke (10) und die Seitenelemente (11) eine in sich stabile Konstruktion bilden und in dieser Form in einer Steuerkabine (3) der großindustriellen Anlage anordenbar ist, und
- **dass** die Mensch-Maschine-Schnittstelle (12) innerhalb eines von dem Fußboden (9) und der Decke (10) begrenzten Standvolumens (17) angeordnet ist.

2. Steuerstand nach Anspruch 1,
**dadurch gekennzeichnet,**
**dass** der Steuerstand ein Bedienpult (18) aufweist, in dem die Eingabeeinrichtungen (15) angeordnet sind, dass der Steuerstand einen vor dem Bedienpult (18) angeordneten Bedienplatz (19) für die Bedienperson (14) aufweist, dass die Ausgabeeinrichtungen (13) einen hinter dem Bedienpult (18) angeordnete Monitorwand (20) umfassen und dass die Monitorwand (20) ihrerseits eine Anzahl von Monitoren (21) umfasst, über welche Zustände der Anlage angezeigt werden.

3. Steuerstand nach Anspruch 2,
**dadurch gekennzeichnet,**
**dass** die Monitorwand (20), bezogen auf den Steuerstand, beweglich ist, so dass die Monitorwand (20) zwischen einem Betriebszustand, in dem die Monitorwand (20) sich von dem Bedienplatz (19) des Steuerstands aus gesehen hinter dem Bedienpult (18) befindet, und einem Parkzustand, in dem die Monitorwand (20) sich nicht hinter dem Bedienpult (18) befindet, bewegbar ist.

4. Steuerstand nach Anspruch 2 oder 3,
**dadurch gekennzeichnet,**
**dass** die Ausgabeeinrichtungen (13) mehrere auf dem Bedienpult (18) angeordnete Monitore (23) umfassen.

5. Steuerstand nach Anspruch 4,
**dadurch gekennzeichnet,**
**dass** die auf dem Bedienpult (18) angeordneten Monitore (23) einzeln, gruppenweise oder in ihrer Gesamtheit nach unten in das Bedienpult (18) versenkbar sind.

6. Steuerstand nach Anspruch 4 oder 5,
**dadurch gekennzeichnet,**
**dass** die kombinierten Eingabe-/Ausgabeeinrichtungen (16) auf dem Bedienpult (18) vor den Monitoren (23) des Bedienpults (18) angeordnete Touchscreens (24) umfassen.

7. Steuerstand nach Anspruch 6,
**dadurch gekennzeichnet,**
**dass** die Touchscreens (24) relativ zu einer waagerechten Ebene schräg angeordnet sind.

8. Steuerstand nach Anspruch 6 oder 7,
**dadurch gekennzeichnet,**
**dass** die Eingabeeinrichtungen (15) zum Entgegennehmen der Steueranweisungen für die Anlage zumindest teilweise in einer Bedienkonsole (26) angeordnet sind, die ihrerseits in dem Bedienpult (18) mittig vor den Touchscreens (24) angeordnet ist.

9. Steuerstand nach Anspruch 8,
**dadurch gekennzeichnet,**
**dass** vom Bedienplatz (19) aus gesehen am linken Rand und/oder am rechten Rand der Bedienkonsole (26) oder links und/oder rechts neben der Bedienkonsole (26) oder links und/oder rechts neben den Touchscreens (24) ein Joystick (27) angeordnet ist.

10. Steuerstand nach Anspruch 9,
**dadurch gekennzeichnet,**
**dass** vom Bedienplatz (19) aus gesehen rechts neben dem rechten Joystick (27) und/oder links neben dem linken Joystick (27) ein weiteres Bedienelement angeordnet ist.

11. Steuerstand nach Anspruch 8, 9 oder 10,
**dadurch gekennzeichnet,**
**dass** an dem Bedienpult (18) unterhalb der Bedienkonsole (26) eine zusätzliche Konsole (28) vorhanden ist, die aus dem Bedienpult (18) auf den Bedienplatz (19) zu ausfahrbar bzw. von dem Bedienplatz (19) weg unter das Bedienpult (18) fahrbar ist.

12. Steuerstand nach Anspruch 11,
**dadurch gekennzeichnet,**
**dass** vom Bedienplatz (19) aus gesehen rechts neben der zusätzlichen Konsole (28) eine ausfahrbare bzw. einfahrbare kleine Konsole angeordnet ist.

13. Steuerstand nach Anspruch 11 oder 12,
**dadurch gekennzeichnet,**
**dass** vom Bedienplatz (19) aus gesehen links neben der zusätzlichen Konsole (28) ein Bedienfeld angeordnet ist.

14. Steuerstand nach einem der Ansprüche 4 bis 13,
**dadurch gekennzeichnet,**
**dass** das Bedienpult (18) an seiner Oberseite (25) zwischen den auf dem Bedienpult (18) angeordneten Monitoren (23) und der Monitorwand (20) eine Klappe (29) aufweist, die um eine vom Bedienplatz (19) aus gesehen von links nach rechts verlaufende waagrechte Achse (30) nach oben schwenkbar ist.

15. Steuerstand nach einem der obigen Ansprüche,
**dadurch gekennzeichnet,**
**dass** der Steuerstand Leuchtelemente (34) aufweist, die von einer Steuereinrichtung (35) des Steuerstands dynamisch angesteuert werden.

16. Steuerstand nach einem der obigen Ansprüche,
**dadurch gekennzeichnet,**
**dass** die Mensch-Maschine-Schnittstelle (12) in einem Kernbereich (36) des Standvolumens (17) angeordnet ist und dass der Steuerstand ein Küchenelement aufweist, das innerhalb des Standvolumens (17) neben dem Kernbereich (36) angeordnet ist.

17. Steuerstand nach einem der obigen Ansprüche,
**dadurch gekennzeichnet,**
**dass** in der Decke (10) des Steuerstands Lautsprecher und/oder Akustikelemente und/oder Beleuchtungselemente (33) und/oder optische Elemente für Lichteffekte angeordnet sind.
